# EUROPÄISCHE PATENTSCHRIFT

(11) **EP 3 867 601 B1**
(45) Veröffentlichungstag und Bekanntmachung des Hinweises auf die Patenterteilung: **05.03.2025**
(21) Anmeldenummer: 19783490.6
(22) Anmeldetag: 02.10.2019
(51) Int. Cl.: G01C 21/28, G01C 21/30, G06V 20/56

(54) **VERFAHREN UND SYSTEM ZUM BESTIMMEN EINES UMFELDMODELLS FÜR EIN FAHRZEUG**
METHOD AND SYSTEM FOR DETERMINING AN ENVIRONMENT MODEL FOR A VEHICLE
PROCÉDÉ ET SYSTÈME POUR DETERMINER UN MODÈLE D'ENVIRONNEMENT POUR UN VÉHICULE

(30) Priorität: 18.10.2018 DE 102018217840
(43) Veröffentlichungstag der Anmeldung: 25.08.2021
(73) Patentinhaber: Volkswagen Aktiengesellschaft, 38440 Wolfsburg (DE)
(72) Erfinder: SCHACK, Moritz, 38126 Braunschweig (DE); MERFELS, Christian, 38102 Braunschweig (DE)
(86) Internationale Anmeldenummer: PCT/EP2019/076784
(87) Internationale Veröffentlichungsnummer: WO 2020/078727

(56) Entgegenhaltungen:
- EP-A1- 3 078 937
- DE-A1- 102014 220 687
- DE-A1- 102016 203 086
- US-A1- 2014 379 247
- US-A1- 2017 184 407

## Beschreibung

Die vorliegende Erfindung betrifft ein Verfahren zum Bestimmen eines Umfeldmodells für ein Fahrzeug, bei dem eine initiale Positionsschätzung für das Fahrzeug erfasst wird und Kartendaten erfasst werden, wobei die Kartendaten Informationen über die räumliche Anordnung von geografischen Bereichen umfassen und die geografischen Bereiche unterschiedlichen Bereichskategorien zugeordnet sind. Es werden Umgebungsdaten in einem Erfassungsraum erfasst und anhand der Umgebungsdaten werden Objekte detektiert, wobei jedem detektierten Objekt eine Objektposition und eine Objektkategorie zugeordnet werden. Anhand der detektierten Objekte wird das Umfeldmodell bestimmt. Die Erfindung betrifft ferner ein System zum Bestimmen eines Umfeldmodells für ein Fahrzeug, umfassend eine Positionserfassungseinheit zum Erfassen einer initialen Positionsschätzung für das Fahrzeug und eine Kartendaten-Erfassungseinheit zum Erfassen der Kartendaten anhand der initialen Positionsschätzung, wobei die Kartendaten Informationen über die räumliche Anordnung von geografischen Bereichen umfassen und die geografischen Bereiche unterschiedlichen Bereichskategorien zugeordnet sind. Das System umfasst ferner eine Umgebungsdaten-Erfassungseinheit zum Erfassen von Umgebungsdaten in einem Erfassungsraum sowie eine Detektionseinheit zum Detektieren von Objekten anhand der Umgebungsdaten und zum Zuordnen einer Objektposition und eine Objektkategorie zu jedem detektierten Objekt. Es umfasst ferner eine Umfeldmodell-Bestimmungseinheit zum Bestimmen des Umfeldmodells anhand der detektierten Objekte. Die Erfindung betrifft zudem ein Computerprogrammprodukt.

Bei der Detektion von Objekten durch Sensoren und Systeme von Fahrzeugen kommt es immer wieder zu Fehldetektionen. Beispielsweise können Daten falsch interpretiert werden, wenn etwa die Seitenfläche eines LKWs für eine Hauswand gehalten wird, oder es kann eine fehlerhafte Zuordnung erfolgen, wenn beispielsweise eine Radwegmarkierung für die Markierung eines Fahrwegs auf der Straße gehalten wird. Wenn anhand der detektierten Objekte eine Navigation durchgeführt oder eine Fahrzeugposition bestimmt wird, kann es hierdurch zu fehlerhaften Ergebnissen kommen.

Es ist bekannt, mehrere Sensoren zu verwenden und eine Fusion der Sensordaten durchzuführen, um zu zuverlässigeren Objektdetektionen zu gelangen.

In der US 2017/0337435 A1 wird ein Verfahren zum Detektieren von Objekten vorgeschlagen, bei dem mit einer Kamera Bilder aufgenommen werden. Es wird zunächst eine grobe Detektion durchgeführt, bei der Objekte in nicht aufeinanderfolgenden Bildern detektiert werden. Anschließend werden diese Objekte in einer feinen Detektion analysiert.

Bei dem in der US 2017/0008521 A1 beschriebenen Verfahren zum Kalibrieren eine Geschwindigkeitsanzeige für ein autonomes Fahrzeug werden Landmarken in einer Vielzahl von Bildern erkannt und anhand ihrer Bewegung relativ zum Fahrzeug wird die Geschwindigkeit des Fahrzeugs berechnet.

Die US 2017/0350712 A1 beschreibt ein Verfahren zum Bestimmen der Position eines Fahrzeugs, wobei in der Umgebung des Fahrzeugs Merkmale extrahiert und die Wahrscheinlichkeit bestimmt wird, dass es sich um stationäre Objekte handelt. Anhand der stationären Objekte erfolgt eine Korrektur der eigenen Position.

In der JP 2014 145666 A wird ein Navigationssystem beschrieben, bei dem eine Fahranweisung relativ zu einem bestimmten Objekt, etwa einem Ladenschild, ausgegeben wird. Dabei wird berücksichtigt, wie gut das Objekt vom Fahrzeug aus erfasst werden kann.

In der JP 2008 051612 A wird ein System zum Erkennen von Landmarken beschrieben, bei dem durch eine Kamera eines Fahrzeugs Daten erfasst und Landmarken erkannt werden. Es wird überprüft, ob die Bedingungen zur sicheren Erkennung ausreichen. Weichen die erkannten Landmarken von den Informationen einer zentral bereitgestellten Karte ab, so wird dies nur dann an die Zentrale gemeldet, wenn die Bedingungen ausreichend gut waren.

In der US 2017 184 407 A1 wird eine Vorrichtung beschrieben, die von einem nahegelegenen mobilen Objekt übertragene Positionsinformationen empfängt. Ein Positionskorrekturprozess wird durchführt, um auf der Grundlage von Kartendaten die Positionsinformationen des nahegelegenen mobilen Objekts so zu korrigieren, dass eine korrigierte Position des Objekts auf einem Fahrbereich einer Straße liegt.

In dem in der US 2014 379 247 A1 beschriebenen autonomen Fahrzeug werden Umgebungsinformationen, die die Fahrspur anzeigen, mit Bilddaten, die für die Umgebung kennzeichnend sind, verglichen, um einen Teil der Bilddaten zu bestimmen, welcher der Fahrspur der Umgebung entspricht. Auf der Grundlage dieses Teils der Bilddaten und durch Vernachlässigung eines restlichen Teils der Bilddaten kann das Fahrzeug bestimmen, ob ein Objekt in der Fahrspur vorhanden ist, und Anweisungen zur Steuerung des Fahrzeugs im autonomen Modus in der Umgebung bereitstellen.

In der EP 3 078 937 A1 wird ein System zur Schätzung der Position eines Fahrzeugs beschrieben, mit einer Vorrichtung, die eine Position des Fahrzeugs unter Verwendung eines charakteristischen Objekts schätzt, das in einem Bild enthalten ist, welches von einer Bildaufnahmevorrichtung am Fahrzeug aufgenommen ist, und einem Server, der mit dieser Vorrichtung über ein Netzwerk verbunden ist. Das charakteristische Objekt wird insbesondere dazu herangezogen, die Positionsgenauigkeit einer auf Satellitennavigation basierenden initialen Positionsbestimmung weiter zu verbessern.

In der DE 10 2016 203086 A1 wird ein Verfahren zur Fahrerassistenz beschrieben, bei dem während der Ausführung eines Fahrmanövers eines Fahrzeugs Objekte in der Umgebung des Fahrzeugs erkannt werden. Als Objekte werden Engstellen bildende stationäre Objekte und entgegenkommende Fahrzeuge klassifiziert. Anschließend erfolgt ein Vorausberechnen der Bewegung des Fahrzeugs und der Bewegungen von entgegenkommenden Fahrzeugen, es werden Freiflächen in der Umgebung der Engstellen bildenden stationären Objekte ermittelt und es werden Blockadesituationen ermittelt, bei denen eine Weiterfahrt des Fahrzeugs an einer Engstelle aufgrund eines entgegenkommenden Fahrzeugs nicht mehr möglich ist

Der vorliegenden Erfindung liegt die Aufgabe zugrunde, ein Verfahren, ein System und ein Computerprogrammprodukt bereitzustellen, die eine besonders zuverlässige Detektion von Objekten im Umfeld des Fahrzeugs erlauben.

Erfindungsgemäß wird diese Aufgabe durch ein Verfahren mit den Merkmalen des Anspruchs 1, ein System mit den Merkmalen des Anspruchs 12 sowie ein Computerprogrammprodukt mit den Merkmalen des Anspruchs 14 gelöst. Vorteilhafte Ausgestaltungen und Weiterbildungen ergeben sich aus den abhängigen Ansprüchen.

Bei dem erfindungsgemäßen Verfahren werden Zuordnungsregeln bereitgestellt, die eine Zuordnung der Objektkategorien zu den Bereichskategorien definieren, wobei die Detektion der Objekte in Abhängigkeit von den Zuordnungsregeln erfolgt.

Dadurch können vorteilhafterweise Detektionen von Objekten als fehlerhaft erkannt und herausgefiltert werden, wenn die erkannten Objekte in bestimmten Bereichen nicht auftreten dürfen.

Ein "Umfeldmodell" im Sinne der Erfindung umfasst Informationen über die räumliche Umgebung des Fahrzeugs. Es umfasst insbesondere Informationen über eine Anordnung von Objekten relativ zu dem Fahrzeug und relativ zueinander. Es kann ferner Informationen über Parameter der Objekte umfassen, etwa eine Ausrichtung, Länge oder Höhe, Breite, einen Winkel oder Radius.

Das Umfeldmodell bildet insbesondere die Umgebung des Fahrzeugs bei einer bestimmten Position oder Pose ab. Dabei wird der Begriff "Position" nachfolgend so verwendet, dass er auch eine "Pose", das heißt eine Kombination von Position und Ausrichtung im Raum, umfasst.

Bei einer Ausbildung des erfindungsgemäßen Verfahrens umfassen die Bereichskategorien zumindest einen befahrbaren Bereich, einen nicht befahrbaren Bereich, einen Fahrbahnbereich, einen Bebauungsbereich und/oder einen Vegetationsbereich. Dadurch können vorteilhafterweise Bereiche unterschieden werden, die für ein Umfeldmodell des Fahrzeugs von besonderer Relevanz sind. Andere Bereichskategorien können alternativ oder zusätzlich vorgesehen sein.

So können die Kartendaten beispielsweise Informationen darüber umfassen, dass ein bestimmter Bereich eine Straße ist, wobei die Bereichskategorie "Straße" gleichzeitig der Kategorie "befahrbarer Bereich" zugeordnet sein kann. Innerhalb des als Straße kategorisierten Bereichs können ferner weitere Bereiche angeordnet sein, beispielsweise mehrere verschiedene Fahrspuren, ein Standstreifen oder ein Randbereich. Ferner kann beispielsweise ein bestimmter Bereich als "Bebauungsbereich" kategorisiert sein, in dem sich etwa Gebäude befinden. Ein weiterer Bereich kann beispielsweise als "Fußweg" und "nicht befahrbar" kategorisiert sein.

Anhand der initialen Positionsschätzung kann die Anordnung der Bereiche relativ zu dem Fahrzeug bestimmt werden. Beispielweise kann sich das Fahrzeug auf einer Straße in einer bestimmten Position befinden und anhand der Kartendaten kann bestimmt werden, in welcher Entfernung und in welche Richtung relativ zum Fahrzeug die anderen Bereiche angeordnet sind.

Bei einer weiteren Ausbildung des Verfahrens wird eine Genauigkeit der initialen Positionsschätzung bestimmt und in Abhängigkeit von der Genauigkeit wird eine Anordnung der geografischen Bereiche relativ zum Fahrzeug bestimmt. Hierdurch wird vorteilhafterweise erreicht, dass auch bei unterschiedlich genauen Positionsschätzungen eine optimale Nutzung der vorhandenen Daten gewährleistet ist.

Bei dem Verfahren wird insbesondere bestimmt, wie die durch die Kartendaten definierten geografischen Bereiche relativ zum Fahrzeug angeordnet sind. Die initiale Positionsschätzung wird dazu benutzt, die Position beziehungsweise Pose des Fahrzeugs innerhalb des Bezugssystems der Kartendaten zu bestimmen. Die Genauigkeit der initialen Positionsschätzung kann nach an sich bekannter Weise bestimmt werden. Sie kann ferner vorgegeben sein, beispielsweise für bestimmte Methoden der Positionsbestimmung, oder durch eine Einrichtung zur Bestimmung der Position kann die Genauigkeit ausgegeben werden, etwa als Fehlerbereich oder Konfidenzintervall.

Hieraus ergibt sich, wie die verschiedenen Bereiche relativ zu dem Fahrzeug angeordnet sind. Bei dem Verfahren kann berücksichtigt werden, dass zum Beispiel bei einer geringeren Genauigkeit der eigenen Positionsschätzung die Anordnung der Bereiche mit einer entsprechenden geringeren Genauigkeit bestimmt werden kann. Es werden insbesondere Bereiche und ihre Anordnung relativ zu dem Fahrzeug bestimmt, bei denen die Zugehörigkeit zu einem bestimmten, in den Kartendaten definierten Bereich nicht genau bestimmt werden kann. Es kann vorgesehen sein, dass in solchen Bereichen die Zuordnungsregeln modifiziert werden, um mit nicht eindeutigen Zuordnungen umzugehen.

Die Erfassung der Umgebungsdaten erfolgt auf an sich bekannte Weise, insbesondere mittels Sensoren. Es können beispielsweise Lidar-, Radar- oder Ultraschallsensoren verwendet werden, ferner kann eine Kamera verwendet werden. Es können zudem andere Sensoren verwendet werden, insbesondere auch Kombinationen unterschiedlicher Sensoren. Der Erfassungsraum, in dem Umgebungsdaten erfasst werden, ist insbesondere als der räumliche Bereich definiert, in dem die verwendeten Sensoren Daten erfassen können, beispielsweise eine Reichweite oder eine Sichtweite der Sensoren. Es kann vorgesehen sein, dass der Erfassungsraum anpassbar ist, beispielsweise indem die Erfassung von Umgebungsdaten auf einen bestimmten räumlichen Bereich eingeschränkt wird.

Auch die Detektion von Objekten in den Umgebungsdaten kann auf an sich bekannte Weise erfolgen, beispielsweise mittels einer Mustererkennung. Bei dem Verfahren werden insbesondere semantisch definierte Objekte detektiert, das heißt Objekte, die als eigene Einheiten wiedererkennbar sind und bestimmten Objektkategorien zugeordnet werden.

Auch die Zuordnung zu den Objektkategorien erfolgt auf an sich bekannte Weise, wobei jedem detektierten Objekt zumindest eine Objektkategorie zugeordnet wird. Insbesondere wird zwischen statischen und dynamischen Objekten unterschieden, wobei statische Objekte längerfristig in einer festen Anordnung innerhalb des Koordinatensystems der Kartendaten vorhanden sind, beispielsweise verkehrstechnische Einrichtungen, Bauwerke, Fahrbahnmarkierungen oder Elemente einer Vegetation. Insbesondere kann es sich um sogenannte "Landmarken" handeln. Dynamische Objekte können beispielsweise andere Verkehrsteilnehmer oder temporär an einer bestimmten Position befindliche Objekte sein. Bei der Detektion eines Objekts wird ferner eine Position des Objekts relativ zum Fahrzeug bestimmt, etwa eine Entfernung und ein Winkel, unter dem das Objekt verfasst wurde.

Die Zuordnungsregeln können auf verschiedene, an sich bekannte Weisen bereitgestellt werden. Sie können beispielsweise mittels einer Speichereinheit vorgegeben oder von einer externen Einheit empfangen werden. Insbesondere können die Kartendaten Zuordnungsregeln umfassen oder die Zuordnungsregeln können gemeinsam mit den Kartendaten erfasst werden. Alternativ oder zusätzlich können die Zuordnungsregeln durch Eingaben eines Nutzers erfasst werden. Zudem können Verfahren des Maschinenlernens verwendet werden, um die Zuordnungsregeln zu bestimmen.

Erfindungsgemäß wird anhand der Zuordnungsregeln eine negative Zuordnung für eine spezifische Bereichskategorie und eine spezifische Objektkategorie bestimmt. Objekte, die der spezifischen Objektkategorie zugeordnet sind, werden anhand von denjenigen Umgebungsdaten detektiert, die keine geografischen Bereiche betreffen, die der negativ zugeordneten spezifischen Bereichskategorie zugeordnet sind. Dadurch kann vorteilhafterweise sichergestellt werden, dass in dem Umfeldmodell keine Objekte berücksichtigt werden, die auf Fehldetektionen beruhen, und die Detektion kann effizienter durchgeführt werden.

Die anhand der Zuordnungsregeln bestimmte negative Zuordnung spezifischer Objektkategorien und Bereichskategorien schließt bestimmte Objektkategorien von bestimmten Bereichskategorien aus. Um Objekte der spezifischen Objektkategorie zu detektieren, können daher Umgebungsdaten mit einem geringeren Umfang verwendet werden, was den Detektionsschritt schneller und effizienter macht. Die Umgebungsdaten können beispielsweise gefiltert werden, um Bereiche der negativ zugeordneten Bereichskategorie auszunehmen. Ferner kann vorgesehen sein, dass keine Umgebungsdaten in Bereichen erfasst werden, die einer negativ zugeordneten Bereichskategorie zugeordnet sind.

Zum Beispiel können Objekte der Kategorie "Fahrbahnmarkierungen" negativ mit Bereichen der Kategorie "Häuserwand" verknüpft sein. Um Fahrbahnmarkierungen zu detektieren, können dann die Umgebungsdaten so gefiltert werden, dass keine im Bereich von Häuserwänden erfassten Umgebungsdaten berücksichtigt werden. Es kann auch vorgesehen sein, einen Sensor so anzusteuern, dass er keine Umgebungsdaten im Bereich von Häuserwänden erfasst. Alternativ oder zusätzlich können detektierte Objekte verworfen werden, wenn sie einer bestimmten Objektkategorie zugeordnet sind und in einem Bereich detektiert werden, für den diese Objektkategorie ausgeschlossen ist.

Zudem kann umgekehrt vorgesehen sein, dass spezifische Objektkategorien positiv mit spezifischen Bereichskategorien verknüpft sind. Objekte dieser Objektkategorien werden folglich nur dann detektiert und zur weiteren Verarbeitung akzeptiert, wenn sie sich in Bereichen der positiv verknüpften Bereichskategorien befinden. Die positive Zuordnung kann genutzt werden, um zur Detektion von Objekten einer bestimmten Objektkategorie gezielt Umgebungsdaten aus Bereichen bestimmter Bereichskategorien zu verwenden und andere Bereiche auszuschließen. Auch dies führt zu einer Reduktion der zu verarbeitenden Daten. Analog zum obigen Beispiel können Objekte der Kategorie "Fahrbahnmarkierungen" positiv mit

Bereichen der Kategorie "Fahrbahnoberfläche" verknüpft sein. Um Fahrbahnmarkierungen zu detektieren, können dann die Umgebungsdaten so gefiltert werden, dass nur im Bereich der Fahrbahnoberfläche erfasste Umgebungsdaten berücksichtigt werden. Es kann auch vorgesehen sein, einen Sensor so anzusteuern, dass er bevorzugt oder ausschließlich Umgebungsdaten im Bereich der Fahrbahnoberfläche erfasst.

Bei einer weiteren Ausbildung werden bei der Detektion der Objekte zunächst vorläufige Detektionen bestimmt und die vorläufigen Detektionen werden anhand der Zuordnungsregeln gefiltert. Dadurch werden vorteilhafterweise die Detektionen anhand der Zuordnungsregeln überprüft.

Bei der Filterung wird insbesondere für jedes der Objekte geprüft, zu welcher Objektkategorie es gehört und welcher Bereichskategorie die Position des detektierten Objekts zugeordnet ist. Schließen sich Objekt- und Bereichskategorie aus, so wird das detektierte Objekt verworfen und nicht beim Bestimmen des Umfeldmodells berücksichtigt. Sind dagegen Objekt- und Bereichskategorie einander positiv zugeordnet, so wird das detektierte Objekt berücksichtigt.

Bei einer Weiterbildung wird bei der Detektion der Objekte anhand der Zuordnungsregeln eine Teilmenge der erfassten Umgebungsdaten bestimmt und die Objekte werden anhand der Teilmenge der Umgebungsdaten detektiert. Dadurch kann die Verarbeitung der Umgebungsdaten vorteilhafterweise besonders effizient gestaltet werden, da unnötige Umgebungsdaten nicht für die Detektion verwendet werden, und eine Verarbeitung in Echtzeit beziehungsweise in ausreichender Geschwindigkeit zur Verwendung während einer Fahrzeugfahrt kann gewährleistet werden.

Beispielsweise kann vorgesehen sein, dass gezielt Objekte einer bestimmten Objektkategorie detektiert werden sollen. Anhand der Zuordnungsdaten kann bestimmt werden, mit welchen Bereichskategorien diese Objekte positiv verknüpft sind, das heißt, in welchen Bereichen die gewünschten Objekte detektiert werden können. Anhand der Kartendaten wird bestimmt, wie die Bereiche der entsprechenden Bereichskategorien relativ zu dem Fahrzeug angeordnet sind. Die erfassten Umgebungsdaten werden so verarbeitet, dass eine Teilmenge gebildet wird, die sich im Wesentlichen auf diese Bereiche beschränkt. Dies kann beispielsweise anhand einer Filterung ausgeführt werden. Die Umgebungsdaten werden dabei reduziert. Zum Beispiel kann vorgesehen sein, dass Fahrbahnmarkierungen nur im Bereich der Fahrbahnoberfläche detektiert werden und andere Bereiche, etwa bebaute Flächen, von der Detektion ausgenommen sind.

Bei einer weiteren Ausbildung wird der Erfassungsraum, in dem die Umgebungsdaten erfasst werden, anhand der Zuordnungsregeln gebildet. Dadurch werden vorteilhafterweise die erfassten Daten auf den nötigen Umfang beschränkt. Anders als in dem oben erläuterten Fall, bei dem die erfassten Umgebungsdaten auf eine geeignete Teilmenge reduziert werden, kann hier die Reduzierung bereits bei der Erfassung erfolgen. Beispielsweise kann ein Raumwinkel begrenzt werden, innerhalb dessen Daten erfasst werden.

Auch hier kann berücksichtigt werden, dass die initiale Positionsschätzung mit einer bestimmten Ungenauigkeit erfolgt und die relevanten Bereich daher insbesondere größter gewählt werden müssen, um alle relevanten Objekte erfassen zu können.

Bei einer Weiterbildung sind die detektierten Objekte statische Objekte. Diese eignen sich vorteilhafterweise besonders gut zur Verwendung in einer Positionsbestimmung. Die statischen Objekte sind bestimmten Objektkategorien zugeordnet, die als statisch bezeichnet werden. Sie weisen im Wesentlichen konstante Eigenschaften auf, etwa eine feste Position und Ausrichtung, Größe, Höhe, Breite oder eine Anordnung relativ zueinander.

Beispielsweise können die Objektkategorien Pfosten, Pfähle, Verkehrsbauwerke, Elemente einer Randbebauung, Fahrbahnmarkierungen, Schilder und Lichtsignalanlagen umfassen. Derartige Element sind vorteilhafterweise im Umfeld von Straßen weit verbreitet und daher universell nutzbar.

Die initiale Positionsschätzung erfolgt auf an sich bekannte Weise, beispielsweise mittels eines globalen Navigationssatellitensystems, etwa GPS. Die Position oder Pose des Fahrzeugs kann dabei in verschiedenen Koordinatensystemen bestimmt werden, etwa in einem globalen Koordinatensystem oder in einem Koordinatensystem relativ zu einem bestimmten Bezugspunkt. Zudem können an sich bekannte Verfahren zur Optimierung der Positionsbestimmung verwendet werden, etwa mittels Landmarken. Die initiale Positionsschätzung kann ferner durch eine externe Einheit erzeugt und vom Fahrzeug empfangen werden, beispielsweise bereitgestellt durch andere Verkehrsteilnehmer oder eine Verkehrsbeobachtungseinrichtung.

Bei einer weiteren Ausbildung wird anhand der initialen Positionsschätzung und des Umfeldmodells eine optimierte Positionsschätzung für das Fahrzeug bestimmt. Die optimierte Positionsschätzung kann in einer iterativen Durchführung des Verfahrens als neue initiale Positionsschätzung verwendet werden, etwa für eine Aktualisierung und ein neues Bestimmen einer weiter optimierten Positionsschätzung oder des Umfeldmodells. Das Umfeldmodell kann dadurch vorteilhafterweise genutzt werden, um die Position beziehungsweise Pose des Fahrzeugs besonders genau zu bestimmen.

Die optimierte Positionsschätzung wird insbesondere in einem globalen Koordinatensystem oder in einem Koordinatensystem der Kartendaten angegeben. Insbesondere wird einen Kartenabgleich durchgeführt, bei dem die von den Kartendaten umfassten Informationen über Landmarken, insbesondere detektierbare Objekte, mit den tatsächlich detektierten Objekten abgeglichen werden. Insbesondere wird dabei ein Optimierungsproblem gelöst, bei dem die Positionen der detektierten Objekte mit den von den Kartendaten umfassten Landmarken möglichst gut angenähert werden. Über das Verhältnis der Position und Ausrichtung des Fahrzeugs gegenüber der Anordnung der detektierten Objekte können dadurch die Position und Ausrichtung des Fahrzeugs im Koordinatensystem einer Karte bestimmt werden.

Bei einer Weiterbildung umfassen die detektierten Objekte dynamische Objekte. Dadurch können vorteilhafterweise Detektionen von dynamischen Objekten plausibilisiert werden.

Beispielsweise können die Objektkategorien, denen dynamische Objekte zugeordnet werden, andere Verkehrsteilnehmer umfassen. Das Verfahren gemäß der Erfindung kann in diesem Fall genutzt werden, um sicherzustellen, dass solche Objekte nur in zulässigen Bereichen detektiert werden und Fehldetektionen sowie unangemessene Reaktionen auf Fehldetektionen vermieden werden. Zum Beispiel tritt bei bekannten Verfahren die Schwierigkeit auf, dass die unregelmäßigen Formen einer Vegetation am Rand einer Fahrbahn zur fehlerhaften Erkennung anderer Verkehrsteilnehmer in diesen Bereichen führt. Beispielsweise kann fehlerhafterweise ein im Bereich der Vegetation befindliches Fahrzeug erkannt werden.

Dynamische Objekte können von dem Umfeldmodell umfasst sein oder zusätzlich zu diesem verarbeitet werden, beispielsweise um sie an ein Fahrerassistenzsystem zu übertragen.

Die Kartendaten können auf an sich bekannte Weise erfasst werden, beispielsweise durch Abrufen von einer Speichereinheit des Fahrzeugs, etwa als Teil eines Navigationssystems. Bei einer Ausbildung des erfindungsgemäßen Verfahrens werden die Kartendaten zumindest teilweise von einer externen Einheit empfangen. Dabei kann es sich beispielsweise um einen externen Server oder eine Backend-Einrichtung handeln, die mit dem Fahrzeug zumindest zeitweise datentechnisch verbunden ist. Hierzu wird zwischen dem Fahrzeug und der externen Einheit eine datentechnische Verbindung hergestellt, etwa über ein Datennetzwerk wie das Internet, und die Kartendaten können durch das Fahrzeug angefordert und erhalten werden. Dadurch können vorteilhafterweise stets aktuelle Kartendaten bereitgestellt werden.

Die Kartendaten werden insbesondere anhand der initialen Positionsschätzung des Fahrzeugs erfasst, beispielsweise so dass die Kartendaten einen geografischen Bereich im Umfeld des Fahrzeugs betreffen, etwa innerhalb eines bestimmten minimalen Radius um die initial geschätzte Position des Fahrzeugs herum. Die Kartendaten können ferner einen geografischen Bereich betreffen, in dem sich das Fahrzeug voraussichtlich in Zukunft befinden wird, wobei beispielsweise eine geplante Route berücksichtigt werden kann. Dadurch können Kartendaten rechtzeitig im Voraus erfasst werden, bevor sie zu einem späteren Zeitpunkt von Relevanz sind.

Die Kartendaten sind bei der Erfindung so ausgebildet, dass sie Informationen über zumindest zwei geographische Bereiche und ihre räumliche Anordnung umfassen. Beispielsweise kann die Anordnung der geografischen Bereiche zueinander und/oder in einem bestimmten globalen oder relativen Koordinatensystem umfasst sein. Die Kartendaten umfassen insbesondere Informationen über die Grenzen bestimmter Bereiche, durch welche die Form und Lage der geografischen Bereiche definiert wird. Die geografischen Bereiche können als flächige Strukturen oder als Punkte oder Linien definiert sein, wobei Punkten und Linien insbesondere eine Breite, einen Radius und/oder eine andere Information über ihre flächige Ausdehnung zugeordnet sein kann.

Die Kartendaten umfassen ferner Informationen darüber, welchen Bereichskategorien ein geographischer Bereich zugeordnet ist. Die Bereichskategorien können so gebildet sein, dass für jeden der Bereiche der Kartendaten eine Bereichskategorie vorgesehen ist. Ein geographischer Bereich kann auch mehreren Bereichskategorien zugeordnet sein.

Die Kartendaten können ferner aktualisiert werden, indem bei Bedarf Aktualisierungsdaten von der externen Einheit bereitgestellt werden. Zudem können Kartendaten angefordert werden, wenn das Fahrzeug in einen bestimmten geografischen Bereich einfahren wird, wobei ein solcher Bereich beispielsweise anhand einer geplanten Route eines Navigationssystems bestimmt werden kann.

Die von der externen Einheit empfangenen Daten können auch ergänzende Informationen umfassen, beispielsweise Informationen über die Anordnung geographischer Bereiche, ihre Zuordnung zu Bereichskategorien oder Zuordnungsregeln.

Bei einer weiteren Ausbildung werden anhand des bestimmten Umfeldmodells Übertragungsdaten gebildet und an eine externe Einheit, etwa einen Server oder eine Backend-Einrichtung, übertragen. Das für ein Fahrzeug erzeugte Umfeldmodell kann dadurch vorteilhafterweise für weitere Zwecke genutzt werden.

Beispielsweise kann das Umfeldmodell oder ein Teil der davon umfassten Informationen einem weiteren Verkehrsteilnehmer bereitgestellt werden. Ferner kann überprüft werden, ob bestehende Kartendaten mit dem Umfeldmodell übereinstimmen oder einer Aktualisierung bedürfen. Stellen beispielsweise mehrere Fahrzeuge Abweichungen der tatsächlich detektierten Objekte von den Kartendaten fest, etwa wenn sich eine Bebauung oder eine Straßenführung geändert hat, so können diese Abweichungen erkannt werden. Die Kartendaten können in der Folge korrigiert oder aktualisiert werden, etwa indem eine neue Erfassung in Auftrag gegeben wird oder indem die Informationen des Umfeldmodells des Fahrzeugs ausgewertet werden.

Bei dem erfindungsgemäßen System ist die Detektionseinheit dazu ausgebildet, die Objekte in Abhängigkeit von Zuordnungsregeln zu detektieren, wobei die Zuordnungsregeln eine Zuordnung der Objektkategorien zu den Bereichskategorien definieren. Das erfindungsgemäße System ist dadurch gekennzeichnet, dass anhand der Zuordnungsregeln eine negative Zuordnung für eine spezifische Bereichskategorie und eine spezifische Objektkategorie bestimmbar ist; und Objekte, die der spezifischen Objektkategorie zugeordnet sind, anhand von denjenigen Umgebungsdaten detektierbar sind, die keine geografischen Bereiche betreffen, die der negativ zugeordneten spezifischen Bereichskategorie zugeordnet sind.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Bei einer Ausbildung des erfindungsgemäßen Systems umfasst die Umgebungsdaten-Erfassungseinheit einen Lidar-, Radar- oder Ultraschallsensor oder eine Kamera für sichtbares oder Infrarotlicht. Ferner können andere Sensortypen umfasst sein oder es können Kombinationen mehrerer Sensoren und Sensortypen vorgesehen sein. Auf diese Weise kann eine Vielzahl gegebenenfalls bereits vorhandener Fahrzeugsensoren genutzt werden, um die Umgebungsdaten zu erfassen.

Das erfindungsgemäße Computerprogrammprodukt umfasst Anweisungen, die beim Ausführen mittels eines Computers den Computer dazu veranlassen, das oben beschriebene Verfahren auszuführen.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Systems,
- Figur 2: zeigt ein Ausführungsbeispiel des erfindungsgemäßen Verfahrens und
- Figuren 3A bis 3D: zeigen ein Ausführungsbeispiel einer Verkehrssituation, in der das erfindungsgemäße Verfahren ausgeführt werden kann.

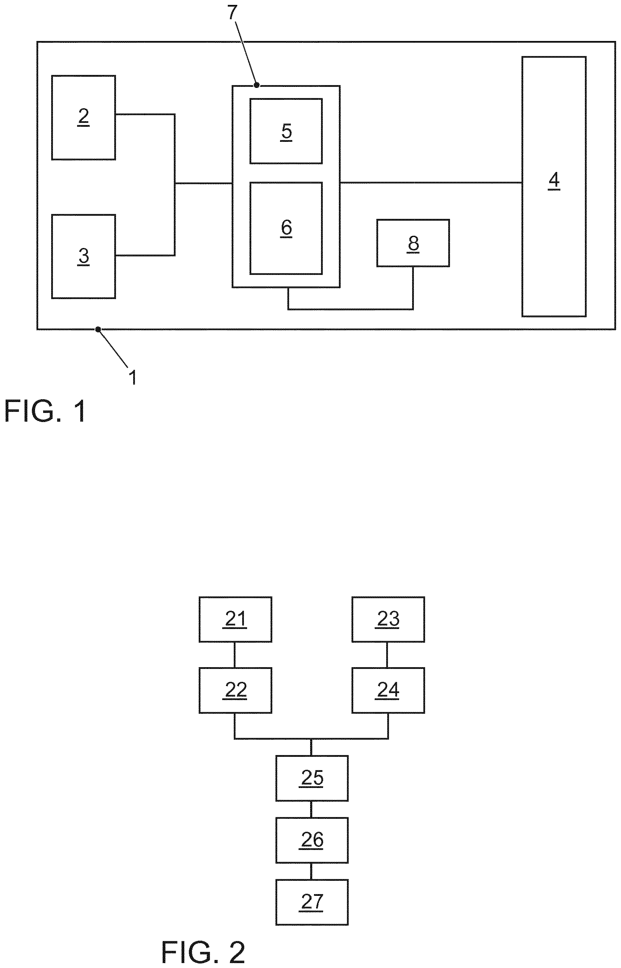

Mit Bezug zu Figur 1 wird ein Fahrzeug mit einem Ausführungsbeispiel des erfindungsgemäßen Systems erläutert.

Das Fahrzeug 1 umfasst eine Positionserfassungseinheit 2, eine Kartendaten-Erfassungseinheit 3 und eine Umgebungsdaten-Erfassungseinheit 4. Die Positionserfassungseinheit 2 umfasst bei dem Ausführungsbeispiel ein GPS-Modul. Die Kartendaten-Erfassungseinheit 3 umfasst eine Schnittstelle zu einer nicht dargestellten Speichereinheit, die Kartendaten zum Abruf bereitstellt. Bei anderen Ausführungsbeispielen kann die Kartendaten-Erfassungseinheit 3 als Schnittstelle zu einer externen Einheit ausgebildet sein, von der Kartendaten oder ergänzende Kartendaten abrufbar sind. Die Umgebungsdaten-Erfassungseinheit 4 umfasst bei dem Ausführungsbeispiel eine Kamera, die im Frontbereich des Fahrzeugs 1 angeordnet ist und Bilddaten über den vor dem Fahrzeug 1 liegenden Bereich erfasst. Bei weiteren Ausführungsbeispielen können alternativ oder zusätzlich andere Sensoren vorgesehen sein, etwa eine Infrarotkamera, eine 3D-Kamera oder ein Ultraschall-, Radar- oder Lidar-Sensor.

Das Fahrzeug 1 umfasst ferner eine Recheneinheit 7, die wiederum eine Detektionseinheit 5 und eine Umfeldmodell-Bestimmungseinheit 6 umfasst. Die Recheneinheit 7 ist mit der Positionserfassungseinheit 2, der Kartendaten-Erfassungseinheit 3 und der Umgebungsdaten-Erfassungseinheit 4 gekoppelt. Die Recheneinheit 7 ist ferner mit einem Fahrerassistenzsystem 8 gekoppelt.

Bei dem Ausführungsbeispiel umfasst das Fahrerassistenzsystem 8 ein Modul zur zumindest teilweise autonomen Steuerung des Fahrzeugs 1. Es können verschiedene, an sich bekannte Fahrerassistenzsysteme 8 vorgesehen sein.

Mit Bezug zu Figur 2 wird ein Ausführungsbeispiel des erfindungsgemäßen Verfahrens erläutert. Dabei wird von dem oben erläuterten Ausführungsbeispiel des erfindungsgemäßen Systems ausgegangen, welches durch die Beschreibung des Verfahrens weiter spezifiziert wird.

In einem Schritt 21 wird eine initiale Positionsschätzung erfasst. Bei dem Ausführungsbeispiel geschieht dies anhand der Positionserfassungseinheit 2 mit deren GPS-Modul. Es können unterschiedliche, an sich bekannte Verfahren zur Positionsbestimmung eingesetzt werden, wobei insbesondere vorgesehen ist, dass zusammen mit der Positionsschätzung auch eine Angabe der Genauigkeit dieser Schätzung bereitgestellt wird. Bei dem Ausführungsbeispiel umfasst die Positionsbestimmung auch die Bestimmung der Ausrichtung des Fahrzeugs, das heißt, es wird die Pose des Fahrzeugs bestimmt.

In einem weiteren Schritt 22 werden Kartendaten erfasst. Bei dem Ausführungsbeispiel werden anhand der initialen Positionsschätzung Kartendaten über einen geografischen Bereich in einem bestimmten Umkreis um das Fahrzeug 1 erfasst. Bei weiteren Ausführungsbeispielen können alternativ oder zusätzlich Kartendaten über einen geografischen Bereich erfasst werden, den das Fahrzeug 1 voraussichtlich in der Zukunft befahren wird, etwa weil eine Route zu diesem Bereich geplant ist.

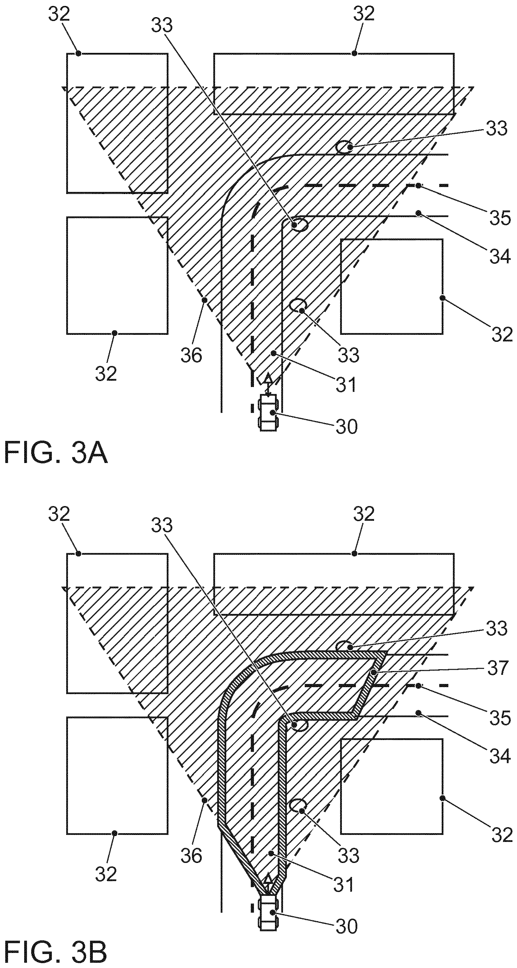

Die Kartendaten umfassen Informationen über die Lage und Anordnung geographischer Bereiche sowie eine Information darüber, welchen Bereichskategorien die einzelnen Bereiche zugeordnet sind. Beispielsweise sind Informationen über den Verlauf von Straßen und Fahrwegen umfasst sowie deren Breite oder anderweitige räumlicher Ausdehnung. Ferner sind bei dem Ausführungsbeispiel Informationen darüber umfasst, wo sich Gebäude neben einer Straße befinden. Beispiele für Bereichskategorien sind etwa befahrbare und nicht befahrbare Bereiche, ein Fahrbahnbereich, ein Bebauungsbereich oder ein Vegetationsbereich. Die Anordnung der Bereiche wird unten mit Bezug zu den Figuren 3A bis 3D näher erläutert.

In einem Schritt 23 werden Umgebungsdaten erfasst, wobei hierzu bei dem Ausführungsbeispiel die Kamera der Umgebungsdaten-Erfassungseinheit 4 genutzt wird.

In einem weiteren Schritt 24 wird anhand der Umgebungsdaten eine Detektion von Objekten durchgeführt, insbesondere anhand bekannter Verfahren zur Mustererkennung, etwa zur Detektion von Landmarken. Dabei können insbesondere auch Verfahren des Maschinenlernens oder der künstlichen Intelligenz eingesetzt werden. Wird in den Umgebungsdaten ein Objekt detektiert, so werden ihm eine Position und eine Objektkategorie zugeordnet. Darüber hinaus kann vorgesehen sein, dass weitere Merkmale bestimmt werden, etwa eine Ausrichtung, eine Größe, Länge, Breite oder farbliche Gestaltung eines Objekts. Die Zuordnung zu einer Objektkategorien erfolgt insbesondere anhand der für ein Objekt detektierten Merkmale. Beispiele für Objektkategorien sind beispielsweise Pfosten, Pfähle, Verkehrsbauwerke, Elemente einer Randbebauung, Fahrbahnmarkierungen, Schilder oder Lichtsignalanlagen.

Bei dem Ausführungsbeispiel werden insbesondere statische Objekte detektiert, die entsprechenden statischen Objektkategorien zugeordnet sind. Bei weiteren Ausführungsbeispielen können alternativ oder zusätzlich dynamische Objekte detektiert werden. Beispiele für dynamische Objektkategorien sind andere Verkehrsteilnehmer, PKW, LKW, Fußgänger oder Fahrräder.

In einem Schritt 25 wird eine Filterung der detektierten Objekte durchgeführt. Hierzu werden Zuordnungsregeln erfasst, die bei dem Ausführungsbeispiel von der Kartendaten-Erfassungseinheit 3 bereitgestellt werden. Die Zuordnungsregeln umfassen eine positive und/oder negative Zuordnung von Objektkategorien und Bereichskategorien. Es wird insbesondere definiert, dass Objekte einer bestimmten Objektkategorie in Bereichen einer bestimmten Bereichskategorie nicht detektiert werden sollen. Beispielsweise kann davon ausgegangen werden, dass sich keine Gebäudekanten auf einer Fahrbahn befinden. Bei dem vorliegenden Ausführungsbeispiel werden diese Objekte daher im Schritt 25 verworfen.

Bei einem Schritt 26 wird anhand der detektierten Objekte ein Umfeldmodell für das Fahrzeug 1 bestimmt. Dieses umfasst die Positionen und insbesondere auch die Ausrichtungen der detektierten Objekte relativ zu dem Fahrzeug 1. Es umfasst ferner Informationen über die Objekte, insbesondere die ihnen zugeordneten Objektkategorien. Das Umfeldmodell kann weitere Informationen umfassen.

Es wird eine Optimierung der initialen Positionsschätzung durchgeführt, insbesondere mittels eines Kartenabgleichs. Dabei wird ein Optimierungsproblem gelöst, bei dem die detektierten Objekte, deren Positionen relativ zum Fahrzeug 1 und relativ zueinander bestimmt wurden, mit den Positionen überlagert werden, die von den Kartendaten für die Objekte umfasst sind. Dies geschieht auf an sich bekannte Weise, insbesondere anhand von Verfahren der Positionsbestimmung mittels Landmarken. Auf diese Weise wird eine optimierte Position und insbesondere auch Ausrichtung des Fahrzeugs 1 im Koordinatensystem der Kartendaten bestimmt.

In einem weiteren Schritt 27 wird die optimierte Position an das Fahrerassistenzsystem 8 ausgegeben, beispielsweise um eine teilweise oder vollständig autonome Steuerung des Fahrzeugs 1 durchzuführen.

Bei weiteren Ausführungsbeispielen ist vorgesehen, dass bei der Filterung der detektierten Objekte die Genauigkeit der initialen Positionsschätzung berücksichtigt wird. Beispielsweise kann für eine Position relativ zum Fahrzeug 1 nicht genau bestimmt werden, ob sie zu einem Bereich einer ersten Bereichskategorie oder zu einer zweiten Bereichskategorie gehört. Die Zuordnungsregeln können hier so angewandt werden, dass zum Beispiel Objekte einer bestimmten Objektklasse an einer Position akzeptiert werden, obwohl sie sich mit einer bestimmten Wahrscheinlichkeit in einem Bereich befinden, in dem sie nicht detektiert werden sollten. Umgekehrt kann vorgesehen sein, dass detektierte Objekte in solchen Zweifelsfällen verworfen werden. Zudem kann ein Verfahren vorgesehen sein, bei dem bei der Detektion eines bestimmten Objekts, insbesondere an einer nicht eindeutig einer Bereichskategorie zugeordneten Position, eine Plausibilisierung durchgeführt wird, etwa in dem entsprechende Objekte in den Kartendaten gesucht werden. Auf diese Weise kann bestimmt werden, ob eine bestimmte Detektion eines Objekts plausibel ist und ob das Objekt daher in dem Umfeldmodell berücksichtigt oder verworfen werden soll.

Beim Bestimmen des Umfeldmodells kann eine Schwierigkeit darin bestehen, dass anhand des Umfeldmodells eine Position bestimmt werden soll und gleichzeitig eine initiale Positionsschätzung vorausgesetzt wird. Es kann vorgesehen sein, dass in einem iterativen Verfahren die optimierte Position genutzt wird, um die initiale Positionsschätzung in einem nächsten Schritt zu verbessern. Ferner kann die Ungenauigkeit der initialen Positionsschätzung auf verschiedene Weise berücksichtigt werden, etwa indem die Überprüfung einzelner detektierte Objekte parallel zu ihrer Zuordnung zu bestimmten Bereichskategorien erfolgt.

Bei einem weiteren Ausführungsbeispiel ist vorgesehen, dass die Zuordnungsregeln eine positive Zuordnung zwischen Objektkategorien und Bereichskategorien umfassen. In diesem Fall definieren die Zuordnungsregeln, dass Objekte einer bestimmten Objektkategorie lediglich in Bereichen anzutreffen sind, die zu einer bestimmten Bereichskategorie gehören. Es kann ferner vorgesehen sein, dass beim Detektieren der Objekte bereits berücksichtigt wird, in welchen Bereichen Objekte einer bestimmten Objektkategorie gesucht werden sollen beziehungsweise nicht detektiert werden sollten. In diesem Fall wird eine Filterung der erfassten Umgebungsdaten so vorgenommen, dass lediglich solche Daten berücksichtigt werden, die in passenden Bereichen erfasst wurden. Das heißt, die Umgebungsdaten werden auf eine Teilmenge so beschränkt, dass lediglich Umgebungsdaten solcher Bereiche analysiert werden, die positiv oder zumindest nicht negativ mit einer bestimmten Objektkategorie verknüpft sind. Auf diese Weise wird die Datenmenge, innerhalb welcher eine Detektion von Objekten vorgenommen werden soll, verringert, was insbesondere bei aufwendigen Verfahren zur Mustererkennung die Rechenzeit merklich verkürzt. Auf diese Weise kann das Verfahren besser in Echtzeit beziehungsweise zur Laufzeit, das heißt während des Betriebs des Fahrzeugs 1 durchgeführt werden.

In weiteren Ausführungsbeispielen ist die Umgebungsdaten-Erfassungseinheit 4 so eingestellt, dass Umgebungsdaten nur in bestimmten räumlichen Bereichen erfasst werden. Um Objekte einer bestimmten Objektkategorie zu erfassen, ist dann vorgesehen, dass lediglich in positiv oder zumindest nicht negativ mit der Objektkategorie verknüpften Bereichen Umgebungsdaten erfasst werden. Auf diese Weise kann die Menge der zu verarbeitenden Daten verringert werden.

Mit Bezug zu den Figuren 3A bis 3D wird das Ausführungsbeispiel des erfindungsgemäßen Verfahrens in einer beispielhaften Verkehrssituation detaillierter erläutert. Dabei wird von den oben erläuterten Ausführungsbeispielen des erfindungsgemäßen Systems und des erfindungsgemäßen Verfahrens ausgegangen.

Figur 3A zeigt eine Darstellung des Ego-Fahrzeugs 30 auf einer Fahrbahn 31. Ein Pfeilsymbol symbolisiert die Vorwärts-Richtung des Fahrzeugs 30. Ferner ist ein Erfassungsraum 36 der Umgebungsdaten-Erfassungseinheit 4 angedeutet, der sich vom Fahrzeug 30 aus nach vorn symmetrisch in einem bestimmten Winkel erstreckt. Der Erfassungsraum 36 kann, insbesondere je nach den verwendeten Sensoren der Umgebungsdaten-Erfassungseinheit 4, unterschiedlich ausgebildet sein, insbesondere betreffend den Öffnungswinkel, die Richtung, die Reichweite und die Abhängigkeit von Umgebungsbedingungen, wie etwa einer Sichtweite.

Auf der Oberfläche der Fahrbahn 31 ist eine in dem Ausführungsbeispiel mittig verlaufende Fahrstreifenmarkierung 35 angebracht und die Fahrbahn 31 wird durch eine Bordsteinkante 34 seitlich begrenzt. Die Fahrbahn 31 beschreibt in dem Ausführungsbeispiel eine Rechtskurve. Neben der Fahrbahn 31 sind Pfosten 33 angeordnet, die insbesondere anhand ihrer Dicke und Höhe als Leitpfosten identifiziert werden können. Ferner sind seitlich neben der Fahrbahn 31 Gebäude 32 angeordnet.

Bei dem Ausführungsbeispiel umfassen die Kartendaten, die zur Ausführung des erfindungsgemäßen Verfahrens mittels der Kartendaten-Erfassungseinheit 3 erfasst werden, Informationen über den Verlauf und die räumliche Erstreckung der Fahrbahn 31, die Fahrstreifenmarkierung 35, das Vorhandensein und bestimmte Merkmale der Bordsteinkante 34, die Pfosten 33 sowie die Gebäude 32. Insbesondere umfassen die Kartendaten Informationen über die Anordnung bestimmter Bereiche sowie ihre Zuordnung zu bestimmten Bereichskategorie. Dies wird nachfolgend mit Bezug zu den Figuren 3B bis 3D näher erläutert.

In Figur 3B ist ein befahrbarer Bereich 37 hervorgehoben, beziehungsweise die Schnittmenge eines solchen befahrbaren Bereich 37 mit dem Erfassungsraum 36. Der befahrbare Bereich 37 erstreckt sich über die Fläche der Fahrbahn 31. Positionen innerhalb dieses Bereichs werden der Bereichskategorie "befahrbarer Bereich" zugeordnet. Bei dem Ausführungsbeispiel ist vorgesehen, dass bestimmte Objektkategorien, beispielsweise Objekte der Kategorie "Pfosten" oder "Gebäudekanten" hier nicht detektiert werden sollen, das heißt, solche Detektionen werden als Fehldetektionen verworfen. Andererseits ist diese Bereichskategorie mit anderen Objektkategorien positiv verknüpft, beispielsweise die Kategorie "Fahrbahnmarkierungen". Bei dem Ausführungsbeispiel ist daher vorgesehen, dass zum Detektieren der Fahrbahnmarkierung 35 nur eine Teilmenge der erfassten Umfelddaten analysiert wird, die den befahrbaren Bereich 37 umfasst. Eine weitere beispielhafte Objektkategorie kann etwa ein "vorausfahrendes Fahrzeug" sein, dessen Detektion lediglich im befahrbaren Bereich 37 und nicht zum Beispiel im Bereich der Gebäude 32 erwartet wird.

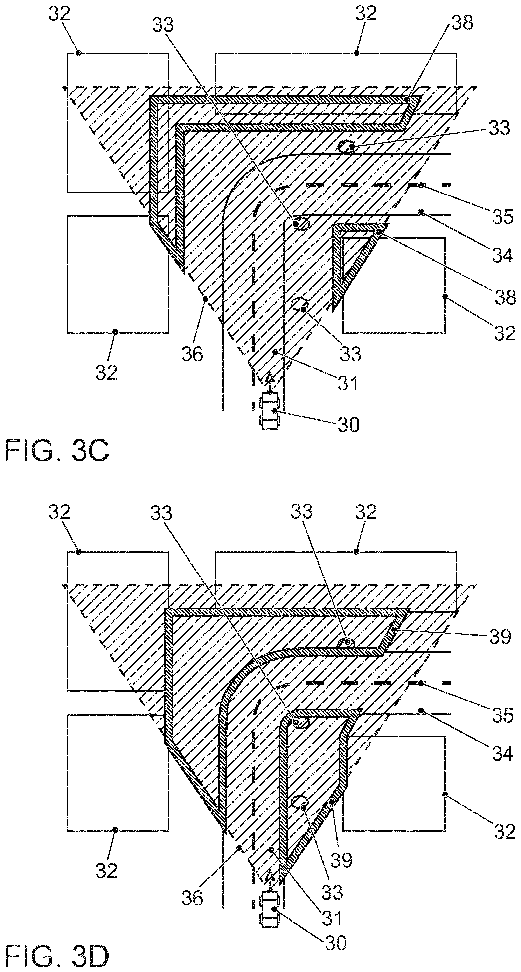

In Figur 3C ist ein Gebäudefronten-Bereich 38 hervorgehoben, der in einem bestimmten Abstand von der Fahrbahn 31 und entlang der Gebäude 32 angeordnet ist. Die Anordnung des Gebäudefronten-Bereichs 38 kann beispielsweise von den Kartendaten umfasst sein oder eine Einheit des Fahrzeugs 1 kann anhand der Lage der Gebäude 32, die von den Kartendaten umfasst sind, bestimmen, wo die Gebäudefronten 38 angeordnet sind. Hier können beispielsweise Kanten, Fassadenstrukturen oder weitere Merkmale von Gebäuden 32 als statische Objekte detektiert werden. Der Gebäudefronten-Bereich 38 kann positiv mit Objektkategorien verknüpft sein, bei denen Merkmale der Gebäude 32 detektiert werden; er kann negativ mit Objektkategorien verknüpft sein, die beispielsweise andere Verkehrsteilnehmer betreffen. Analog zu dem oben beschriebenen Vorgehen kann vorgesehen sein, dass zur Detektion von Gebäudekanten und -ecken lediglich eine Teilmenge der erfassten Umgebungsdaten analysiert wird, die den Gebäudefronten-Bereich 38 umfasst.

In Figur 3D ist ein Fahrbahnrandbereich 39 hervorgehoben, der angrenzend, in geringem Abstand oder mit einer geringen Überlappung zur Fahrbahn 31 angeordnet ist. In diesem Fahrbahnrandbereich 39 sind beispielsweise die Pfosten 33 angeordnet. Ferner kann die Bordsteinkante 34 in diesem Bereich zu finden sein. Dementsprechend kann vorgesehen sein, dass diese Objekte nur in einer entsprechenden Teilmenge der Umgebungsdaten mit dem Fahrbahnrandbereich 39 detektiert werden. Weitere beispielhafte Objekte können etwa Fußgänger sein, die sich auf einem Fußweg im Fahrbahnrandbereich 39 befinden; analog dazu können Radfahrer auf einem Radweg detektiert werden. Durch eine geeignete Definition der Bereiche kann dabei beispielsweise sichergestellt werden, dass Markierungen auf einem Fahrbahnweg, der sich in dem Fahrbahnrandbereich 39 befindet, nicht als relevant für die Fahrt des Fahrzeugs 1 interpretiert werden, während gleichzeitig die Fahrstreifenmarkierung 35 im befahrbaren Bereich 37 als relevant erkannt wird.

Bei einem weiteren Ausführungsbeispiel ist vorgesehen sein, dass das Fahrzeug 1 eine Schnittstelle zu einer externen Einheit umfasst. Es werden Kartendaten oder ergänzende Daten sowie Zuordnungsregeln von der externen Einheit erfasst. Diese kann dazu als externer Server oder als Backend-Einrichtungen ausgestaltet sein. Ferner ist eine Übertragung von Daten von dem Fahrzeug 1 zu der externen Einheit vorgesehen, etwa um eine Bewertung von Kartendaten zu ermöglichen, wenn beispielsweise die Plausibilität der Kartendaten anhand der erfassten Umgebungsdaten oder des durch das Fahrzeug 1 erzeugten Umfeldmodells überprüft wird.

### Bezugszeichenliste

- 1: Fahrzeug
- 2: Positionserfassungseinheit
- 3: Kartendaten-Erfassungseinheit
- 4: Umgebungsdaten-Erfassungseinheit
- 5: Detektionseinheit
- 6: Umfeldmodell-Bestimmungseinheit
- 7: Recheneinheit
- 8: Fahrerassistenzsystem
- 21: Erfassung einer initialen Positionsschätzung
- 22: Erfassung von Kartendaten
- 23: Erfassung von Umgebungsdaten
- 24: Detektion von Objekten
- 25: Filterung detektierte Objekte
- 26: Bestimmen eines Umfeldmodells, Positionsoptimierung
- 27: Ausgabe der optimierten Position
- 30: Ego-Fahrzeug (Symbol)
- 31: Fahrbahn
- 32: Statisches Objekt, Gebäude
- 33: Statisches Objekt, Pfosten
- 34: Statisches Objekt, Bordsteinkante
- 35: Statisches Objekt, Fahrstreifenmarkierung
- 36: Erfassungsraum
- 37: Befahrbarer Bereich, Fahrbahnbereich
- 38: Bebauungsbereich, Gebäudefronten
- 39: Fahrbahnrandbereich

## Patentansprüche

1. Verfahren zum Bestimmen eines Umfeldmodells für ein Fahrzeug (1), bei dem
eine initiale Positionsschätzung für das Fahrzeug (1) erfasst wird;
Kartendaten erfasst werden, wobei die Kartendaten Informationen über die räumliche Anordnung von geografischen Bereichen (37, 38, 39) umfassen und die geografischen Bereiche (37, 38, 39) unterschiedlichen Bereichskategorien zugeordnet sind;
Umgebungsdaten in einem Erfassungsraum (36) erfasst werden;
anhand der Umgebungsdaten Objekte (32, 33, 34, 35) detektiert werden, wobei jedem detektierten Objekt (32, 33, 34, 35) eine Objektposition und eine Objektkategorie zugeordnet werden; und
anhand der detektierten Objekte (32, 33, 34, 35) das Umfeldmodell bestimmt wird;
Zuordnungsregeln bereitgestellt werden, die eine Zuordnung der Objektkategorien zu den Bereichskategorien definieren; wobei
die Detektion der Objekte (32, 33, 34, 35) in Abhängigkeit von den Zuordnungsregeln erfolgt,
**dadurch gekennzeichnet, dass**
anhand der Zuordnungsregeln eine negative Zuordnung für eine spezifische Bereichskategorie und eine spezifische Objektkategorie bestimmt wird; und
Objekte (32, 33, 34, 35), die der spezifischen Objektkategorie zugeordnet sind, anhand von denjenigen Umgebungsdaten detektiert werden, die keine geografischen Bereiche (37, 38, 39) betreffen, die der negativ zugeordneten spezifischen Bereichskategorie zugeordnet sind.

2. Verfahren gemäß Anspruch 1,
**dadurch gekennzeichnet, dass**
die Bereichskategorien zumindest einen befahrbaren Bereich (37), einen nicht befahrbaren Bereich, einen Fahrbahnbereich (37), einen Bebauungsbereich (38) und/oder einen Vegetationsbereich umfassen.

3. Verfahren gemäß Anspruch 1 oder 2,
**dadurch gekennzeichnet, dass**
eine Genauigkeit der initialen Positionsschätzung bestimmt wird und in Abhängigkeit von der Genauigkeit eine Anordnung der geografischen Bereiche relativ zum Fahrzeug (1) bestimmt wird.

4. Verfahren gemäß einem der vorhergehenden Ansprüche,
**dadurch gekennzeichnet, dass**
bei der Detektion der Objekte (32, 33, 34, 35) zunächst vorläufige Detektionen bestimmt werden und die vorläufigen Detektionen anhand der Zuordnungsregeln gefiltert werden.

5. Verfahren gemäß einem der vorhergehenden Ansprüche,
**dadurch gekennzeichnet, dass**
bei der Detektion der Objekte (32, 33, 34, 35) anhand der Zuordnungsregeln eine Teilmenge der erfassten Umgebungsdaten bestimmt wird und die Objekte (32, 33, 34, 35) anhand der Teilmenge der Umgebungsdaten detektiert werden.

6. Verfahren gemäß einem der vorhergehenden Ansprüche,
**dadurch gekennzeichnet, dass**
der Erfassungsraum (36), in dem die Umgebungsdaten erfasst werden, anhand der Zuordnungsregeln gebildet wird.

7. Verfahren gemäß einem der vorhergehenden Ansprüche,
**dadurch gekennzeichnet, dass**
die detektierten Objekte (32, 33, 34, 35) statische Objekte (32, 33, 34, 35) sind.

8. Verfahren gemäß Anspruch 7
**dadurch gekennzeichnet, dass**
die Objektkategorien Pfosten (33), Pfähle, Verkehrsbauwerke, Elemente einer Randbebauung (32), Fahrbahnmarkierungen (35), Schilder oder Lichtsignalanlagen umfassen.

9. Verfahren gemäß einem der vorhergehenden Ansprüche,
**dadurch gekennzeichnet, dass**
anhand der initialen Positionsschätzung und des Umfeldmodells eine optimierte Positionsschätzung für das Fahrzeug (1) bestimmt wird.

10. Verfahren gemäß einem der vorhergehenden Ansprüche,
**dadurch gekennzeichnet, dass**
die detektierten Objekte (32, 33, 34, 35) dynamische Objekte umfassen.

11. Verfahren gemäß einem der vorhergehenden Ansprüche,
**dadurch gekennzeichnet, dass**
die Kartendaten zumindest teilweise von einer externen Einheit empfangen werden.

12. System zum Bestimmen eines Umfeldmodells für ein Fahrzeug (1), umfassend
eine Positionserfassungseinheit (2) zum Erfassen einer initialen Positionsschätzung für das Fahrzeug (1);
eine Kartendaten-Erfassungseinheit (3) zum Erfassen von Kartendaten, wobei die Kartendaten Informationen über die räumliche Anordnung von geografischen Bereichen (37, 38, 39) umfassen und die geografischen Bereiche (37, 38, 39) unterschiedlichen Bereichskategorien zugeordnet sind;
eine Umgebungsdaten-Erfassungseinheit (4) zum Erfassen von Umgebungsdaten in einem Erfassungsraum (36);
eine Detektionseinheit (5) zum Detektieren von Objekten (32, 33, 34, 35) anhand der Umgebungsdaten und zum Zuordnen einer Objektposition und einer Objektkategorie zu jedem detektierten Objekt (32, 33, 34, 35); und
eine Umfeldmodell-Bestimmungseinheit (6) zum Bestimmen des Umfeldmodells anhand der detektierten Objekte (32, 33, 34, 35);
wobei die Detektionseinheit (5) dazu eingerichtet ist, die Objekte (32, 33, 34, 35) in Abhängigkeit von Zuordnungsregeln zu detektieren; wobei
die Zuordnungsregeln eine Zuordnung der Objektkategorien zu den Bereichskategorien definieren,
**dadurch gekennzeichnet, dass**
anhand der Zuordnungsregeln eine negative Zuordnung für eine spezifische Bereichskategorie und eine spezifische Objektkategorie bestimmbar ist; und
Objekte (32, 33, 34, 35), die der spezifischen Objektkategorie zugeordnet sind, anhand von denjenigen Umgebungsdaten detektierbar sind, die keine geografischen Bereiche (37, 38, 39) betreffen, die der negativ zugeordneten spezifischen Bereichskategorie zugeordnet sind.

13. System gemäß Anspruch 12,
**dadurch gekennzeichnet, dass**
die Umgebungsdaten-Erfassungseinheit (4) einen Lidar-, Radar- oder Ultraschallsensor oder eine Kamera für sichtbares oder Infrarotlicht umfasst.

14. Computerprogrammprodukt mit Anweisungen, die beim Ausführen mittels eines Computers den Computer dazu veranlassen, das Verfahren gemäß einem der Ansprüche 1 bis 11 auszuführen.

## Claims

1. Method for determining an environment model of a vehicle (1), in which method
an initial position estimate for the vehicle (1) is acquired;
map data are acquired, the map data comprising information about the spatial arrangement of geographical regions (37, 38, 39) and the geographical regions (37, 38, 39) being assigned to different region categories;
environment data are acquired in an acquisition space (36);
objects (32, 33, 34, 35) are detected based on the environment data, each detected object (32, 33, 34, 35) being assigned an object position and an object category; and
the environment model is determined based on the detected objects (32, 33, 34, 35);
assignment rules are provided which define an assignment of the object categories to the region categories;
the detection of the objects (32, 33, 34, 35) taking place depending on the assignment rules,
**characterized in that**
a negative assignment is determined for a specific region category and a specific object category based on the assignment rules; and
objects (32, 33, 34, 35) assigned to the specific object category are detected based on those environment data that do not relate to geographical regions (37, 38, 39) assigned to the negatively assigned specific region category.

2. Method according to claim 1,
**characterized in that**
the region categories comprise at least one drivable region (37), one non-drivable region, one roadway region (37), one developed region (38) and/or one vegetation region.

3. Method according to either claim 1 or claim 2,
**characterized in that**
a precision of the initial position estimate is determined and, depending on the precision, an arrangement of the geographical regions relative to the vehicle (1) is determined.

4. Method according to any of the preceding claims,
**characterized in that**
when detecting the objects (32, 33, 34, 35), preliminary detections are first determined and the preliminary detections are filtered based on the assignment rules.

5. Method according to any of the preceding claims,
**characterized in that**
when detecting the objects (32, 33, 34, 35), a subset of the acquired environment data are determined based on the assignment rules and the objects (32, 33, 34, 35) are detected based on the subset of the environment data.

6. Method according to any of the preceding claims,
**characterized in that**
the acquisition space (36) in which the environment data are detected is formed based on the assignment rules.

7. Method according to any of the preceding claims,
**characterized in that**
the detected objects (32, 33, 34, 35) are static objects (32, 33, 34, 35).

8. Method according to claim 7,
**characterized in that**
the object categories comprise posts (33), poles, traffic structures, elements of a peripheral development (32), road markings (35), signs or traffic signals.

9. Method according to any of the preceding claims,
**characterized in that**
an optimized position estimate for the vehicle (1) is determined based on the initial position estimate and the environment model.

10. Method according to any of the preceding claims,
**characterized in that**
the detected objects (32, 33, 34, 35) comprise dynamic objects.

11. Method according to any of the preceding claims,
**characterized in that**
the map data are at least partially received from an external unit.

12. System for determining an environment model of a vehicle (1), the system comprising
a position acquisition unit (2) for acquiring an initial position estimate for the vehicle (1);
a map data acquisition unit (3) for acquiring map data, the map data comprising information about the spatial arrangement of geographical regions (37, 38, 39) and the geographical regions (37, 38, 39) being assigned to different region categories;
an environment data acquisition unit (4) for acquiring environment data in an acquisition space (36);
a detection unit (5) for detecting objects (32, 33, 34, 35) based on the environment data and for assigning an object position and an object category to each detected object (32, 33, 34, 35); and
an environment model determination unit (6) for determining the environment model based on the detected objects (32, 33, 34, 35);
the detection unit (5) being designed to detect the objects (32, 33, 34, 35) depending on assignment rules;
the assignment rules defining an assignment of the object categories to the region categories,
**characterized in that**
a negative assignment for a specific region category and a specific object category can be determined based on the assignment rules; and
objects (32, 33, 34, 35) assigned to the specific object category can be detected based on those environment data that do not relate to geographical regions (37, 38, 39) assigned to the negatively assigned specific region category.

13. System according to claim 12,
**characterized in that**
the environment data acquisition unit (4) comprises a lidar, radar or ultrasonic sensor or a camera for visible or infrared light.

14. Computer program product having instructions which, when executed by means of a computer, cause the computer to carry out the method according to any of claims 1 to 11.

## Revendications

1. Procédé de détermination d'un modèle d'environnement pour un véhicule (1), dans lequel
une estimation de position initiale pour le véhicule (1) est enregistrée ;
des données cartographiques sont enregistrées, dans lequel les données cartographiques comprennent des informations sur l'agencement spatial de zones géographiques (37, 38, 39) et les zones géographiques (37, 38, 39) sont attribuées à différentes catégories de zones ;
des données d'environnement sont enregistrées dans un espace d'enregistrement (36) ;
des objets (32, 33, 34, 35) sont détectés à l'aide des données d'environnement, dans lequel une position d'objet et une catégorie d'objet sont attribuées à chaque objet (32, 33, 34, 35) détecté ; et
le modèle d'environnement est déterminé à l'aide des objets (32, 33, 34, 35) détectés ;
des règles d'attribution sont fournies, qui définissent une attribution des catégories d'objets aux catégories de zones ; dans lequel
la détection des objets (32, 33, 34, 35) s'effectue en fonction des règles d'attribution,
**caractérisé en ce que**
une attribution négative est déterminée pour une catégorie de zone spécifique et une catégorie d'objet spécifique à l'aide des règles d'attribution ; et
des objets (32, 33, 34, 35) attribués à la catégorie d'objet spécifique sont détectés à l'aide des données d'environnement qui ne concernent pas des zones géographiques (37, 38, 39) attribuées à la catégorie de zone spécifique à attribution négative.

2. Procédé selon la revendication 1,
**caractérisé en ce que**
les catégories de zones comprennent au moins une zone carrossable (37), une zone non carrossable, une zone de chaussée (37), une zone de construction (38) et/ou une zone de végétation.

3. Procédé selon la revendication 1 ou 2,
**caractérisé en ce que**
une précision de l'estimation de position initiale est déterminée et, en fonction de la précision, un agencement des zones géographiques par rapport au véhicule (1) est déterminé.

4. Procédé selon l'une des revendications précédentes,
**caractérisé en ce que**
lors de la détection des objets (32, 33, 34, 35), des détections provisoires sont d'abord déterminées et les détections provisoires sont filtrées à l'aide des règles d'attribution.

5. Procédé selon l'une des revendications précédentes,
**caractérisé en ce que**
lors de la détection des objets (32, 33, 34, 35), un sous-ensemble des données d'environnement enregistrées est déterminé à l'aide des règles d'attribution et les objets (32, 33, 34, 35) sont détectés à l'aide du sous-ensemble des données d'environnement.

6. Procédé selon l'une des revendications précédentes,
**caractérisé en ce que**
l'espace d'enregistrement (36), dans lequel les données d'environnement sont enregistrées, est formé à l'aide des règles d'attribution.

7. Procédé selon l'une des revendications précédentes,
**caractérisé en ce que**
les objets (32, 33, 34, 35) détectés sont des objets (32, 33, 34, 35) statiques.

8. Procédé selon la revendication 7
**caractérisé en ce que**
les catégories d'objets comprennent des poteaux (33), pieux, ouvrages de circulation, éléments d'une construction de bordure (32), marquages de chaussée (35), panneaux ou feux de signalisation.

9. Procédé selon l'une des revendications précédentes,
**caractérisé en ce que**
une estimation de position optimisée pour le véhicule (1) est déterminée à l'aide de l'estimation de position initiale et du modèle d'environnement.

10. Procédé selon l'une des revendications précédentes,
**caractérisé en ce que**
les objets (32, 33, 34, 35) détectés comprennent des objets dynamiques.

11. Procédé selon l'une des revendications précédentes,
**caractérisé en ce que**
les données cartographiques sont reçues, au moins en partie, d'une unité externe.

12. Système de détermination d'un modèle d'environnement pour un véhicule (1), comprenant
une unité d'enregistrement de position (2) pour enregistrer une estimation de position initiale pour le véhicule (1) ;
une unité d'enregistrement de données cartographiques (3) pour enregistrer des données cartographiques, dans lequel les données cartographiques comprennent des informations sur l'agencement spatial de zones géographiques (37, 38, 39) et les zones géographiques (37, 38, 39) sont attribuées à différentes catégories de zones ;
une unité d'enregistrement de données d'environnement (4) pour enregistrer des données d'environnement dans un espace d'enregistrement (36) ;
une unité de détection (5) pour détecter des objets (32, 33, 34, 35) à l'aide des données d'environnement et pour attribuer une position d'objet et une catégorie d'objet à chaque objet (32, 33, 34, 35) détecté ; et
une unité de détermination de modèle d'environnement (6) pour déterminer le modèle d'environnement à l'aide des objets (32, 33, 34, 35) détectés ;
dans lequel l'unité de détection (5) est conçue pour détecter les objets (32, 33, 34, 35) en fonction de règles d'attribution ; dans lequel
les règles d'attribution définissent une attribution des catégories d'objets aux catégories de zones,
**caractérisé en ce que**
une attribution négative peut être déterminée pour une catégorie de zone spécifique et une catégorie d'objet spécifique à l'aide des règles d'attribution ; et
des objets (32, 33, 34, 35) attribués à la catégorie d'objet spécifique sont détectables à l'aide des données d'environnement qui ne concernent pas des zones géographiques (37, 38, 39) attribuées à la catégorie de zone spécifique à attribution négative.

13. Système selon la revendication 12,
**caractérisé en ce que**
l'unité d'enregistrement de données d'environnement (4) comprend un capteur lidar, radar ou à ultrasons ou une caméra pour la lumière visible ou infrarouge.

14. Produit programme d'ordinateur comportant des instructions qui, lorsqu'elles sont exécutées au moyen d'un ordinateur, amènent l'ordinateur à exécuter le procédé selon l'une des revendications 1 à 11.
